Europäisches Patentamt

European Patent Office

Office européen des brevets

(19)

(11) Veröffentlichungsnummer: **0 191 887 B1**

# EUROPÄISCHE PATENTSCHRIFT

(45) Veröffentlichungstag der Patentschrift: **24.07.91**

(51) Int. Cl.⁵: **G02C 5/12**

(21) Anmeldenummer: **85104773.8**

(22) Anmeldetag: **19.04.85**

(54) Seiten- und Sattelstegpartie für eine Brille.

(30) Priorität: **21.02.85 DE 3506073**

(43) Veröffentlichungstag der Anmeldung:
**27.08.86 Patentblatt 86/35**

(45) Bekanntmachung des Hinweises auf die
Patenterteilung:
**24.07.91 Patentblatt 91/30**

(84) Benannte Vertragsstaaten:
**AT BE CH DE FR GB IT LI LU NL SE**

(56) Entgegenhaltungen:
| | |
|---|---|
| EP-A- 0 018 651 | DE-A- 2 449 349 |
| DE-A- 3 044 615 | FR-A- 2 193 211 |
| US-A- 2 084 199 | US-A- 3 233 956 |

(73) Patentinhaber: **EYEMETRICS-SYSTEMS AG**
**Steinbockstrasse 4**
**CH-7001 Chur(CH)**

(72) Erfinder: **Wiedmann, Helmut**
**Hundsbergstrasse 29**
**W-7100 Heilbronn(DE)**

(74) Vertreter: **Grams, Klaus Dieter, Dipl.-Ing. et al**
**Patentanwaltsbüro Tiedtke-Bühling-Kinne-**
**Grupe-Pellmann-Grams-Struif Winter-Roth**
**Bavariaring 4**
**W-8000 München 2(DE)**

**Beschreibung**

Die Erfindung bezieht sich auf eine Seitenstegpartie für eine Brille und eine Sattelstegpartie für eine Brille gemäß dem Oberbegriff von Patentanspruch 1 bzw. dem Oberbegriff von Patentanspruch 2.

Eine Seitenstegpartie für eine Brille mit einem Stegplättchen, einer stabförmigen Stegstütze und einer gelenkartigen Stegbefestigung zum Verbinden des Stegplättchens mit der Stegstütze ist bekannt (DE-PS 3 027 120, DE-OS 2 732 860). Bei dieser bekannten Seitenstegpartie besteht die gelenkartige Stegbefestigung aus einem Zapfenlager (DE-PS 3 027 120) mit Lagerzapfen und zugehörigen Lagerbohrungen am Stegplättchen und an der Stegstütze oder aus einem Kugelgelenk (DE-OS 2 732 860) mit einer Kugel sowie einer Kugelpfanne am Stegplättchen bzw. der Stegstütze. Aufgrund dieser gelenkartigen Stegbefestigungen haben die bekannten Seitenstegpartien den Vorteil, daß sich das Stegplättchen relativ zur Stegstütze bewegen kann und daß es dadurch möglich ist, daß das Stegplättchen sich in gewissem Ausmaß selbsttätig in eine geeignete Anlageposition an der Nasenflanke einstellt.

Nachteilig bei dieser bekannten Seitenstegpartie ist, daß - in Anbetracht der verhältnismäßig kleinen Abmessungen der Elemente der Seitenstegpartie - die Ausbildung der gelenkartigen Stegbefestigung verhältnismäßig kompliziert und beschädigungsempfindlich ist und daß die Funktion der gelenkartigen Stegbefestigung durch Verschmutzungen verhältnismäßig häufig beeinträchtigt wird, so daß die Stegbefestigung zwar nach wie vor das Stegplättchen mit der Stegstütze verbindet, jedoch die Beweglichkeit in der Stegbefestigung verlorengeht.

Ähnliche Schwierigkeiten treten bei herkömmlichen Sattelstegpartien auf.

Eine Sattelstegpartie mit den Merkmalen des Oberbegriffs von Patentanspruch 2 ist durch die US-A-3 233 956 bekannt. Auch dem Oberbegriff von Patentanspruch 1 liegt als nächstkommender Stand der Technik die US-A-3 233 956 zugrunde, obwohl durch diese ausschließlich eine Sattelstegpartie bekannt ist.

Bei der bekannten Stegpartie ist der biegsame Abschnitt als flexibler Stift ausgebildet. Um dem Stift ggf. eine höhere Flexibilität und eine Vorzugsrichtung der Biegung zu geben, kann er mit Einschnitten bzw. Kerben versehen sein. Die Stifte sind normalerweise im wesentlichen gerade und verlaufen jeweils von einem Rand des Stegplättchens des Sattelsteges aus nach vorn zu einer der Stegstützen. Bei der bekannten Stegpartie sollen die flexiblen Stifte einerseits dafür sorgen, daß sie das Stegplättchen in einer vorgegebenen Stellung bezüglich einer Brillenfassung halten. Andererseits sollen sie es aufgrund ihrer Flexibilität ermöglichen, daß sich das Stegplättchen selber korrekt auf der Nase des Brillenträgers ausrichtet, damit die Brille bequem sitzt. Die Befestigung der beiden Enden des flexiblen Stiftes erfolgt im bekannten Fall in der Weise, daß dessen erstes Ende entweder mit dem Stegplättchen einstückig ausgebildet oder mit diesem verklemmt oder verklebt ist und daß das andere Ende des flexiblen Stiftes in eine Buchse an der zugeordneten Stegstütze eingesetzt ist.

Bei der bekannten Stegpartie ist zwar in grundsätzlich günstiger Weise vorgesehen, daß sich das Stegplättchen bei aufgesetzter Brille in gewissem Ausmaß selbsttätig ausrichten kann. Ungünstig ist jedoch, daß hierzu im Bereich des flexiblen Stiftes Momente in einer Größenordnung notwendig sind, die bereits zu störenden, vom Stegplättchen auf bzw. an der Nase verursachten Druckstellen führen können. Ferner besteht ein Nachteil der bekannten Stegpartie darin, daß deren Stegbefestigung, zu der der flexible Stift gehört, in Richtung von vorne nach hinten, d.h. in Längsrichtung des Stiftes, verhältnismäßig großen Bauraum erfordert, so daß es schwierig ist, den Sattelsteg in die günstigste Position in der oder dicht bei der durch die Gläser der Brille definierten Ebene zu bringen.

Der Erfindung liegt die Aufgabe zugrunde, die gattungsgemäße Seiten- bzw. Sattelstegpartie derart auszubilden, daß das jeweilige Stegplättchen von der Stegstütze derart gehalten wird, daß es eine möglichst große Beweglichkeit hat, d.h. allenfalls geringe Momente zum Schwenken des Stegplättchens um den biegsamen Abschnitt notwendig sind.

Diese Aufgabe wird erfindungsgemäß durch die Merkmale in den kennzeichnenden Teilen der Patentansprüche 1 und 2 gelöst, d. h. im wesentlichen dadurch, daß das Stegplättchen und eine auf das untere Ende der Stegstütze geschobene Hülse aus einem weichen, elastischen Kunststoff bestehend einstückig ausgebildet und durch ein Filmscharnier miteinander verbunden sind.

Durch die erfindungsgemäße Ausbildung des biegsamen Abschnitts als Filmscharnier ist auf besonders einfache Weise für hohe Beweglichkeit des Stegplättchens bezüglich der Stegstütze gesorgt, so daß die selbsttätige Ausrichtung der Seitenstegplättchen bzw. des Sattelstegplättchens auf bzw. an der Nase des Brillenträgers auf nur sehr geringe Widerstände im Gelenk der Stegbefestigung trifft. Dies sorgt für hohen Tragekomfort der Brille. Diese hohe Beweglichkeit ist trotz Einstükkigkeit der Einheit aus Stegplättchen, Gelenk und Hülse erzielt und mit sehr geringem Raumbedarf von vorne nach hinten, d.h. im wesentlichen senkrecht zur Ebene des jeweiligen Stegplättchens, erreicht, denn die Verbindung zwischen dem Filmscharnier und der Stegstütze ist aufgrund der aufgesteckten Hülse derart, daß die Hülse zwangsläufig in Richtung der stabförmigen Stegstütze und somit im wesentlichen parallel zur Stegplättchenebene verläuft. Die durch das Filmscharnier gebotene Möglichkeit, das Gelenk raumsparend auszubilden, ist somit durch die mit dem Filmscharnier einstückig ausgebildete Hülse, die die Verbindung der Stegstütze herstellt, sinnvoll genutzt.

Ausführungsbeispiele der Erfindung sind in den Zeichnungen dargestellt und werden im folgenden näher erläutert. Es zeigen:

Fig. 1    eine Seitenansicht, teilweise im Schnitt, einer ersten Ausführungs-form einer erfindungsgemäßen Sei-tenstegpartie;

Fig. 2    eine Draufsicht auf die Seitenstegpartie gemäß Fig. 1 ohne deren Stegstütze;

Fig. 3    eine Ansicht der Seitenstegpartie ohne deren Stegstütze von rechts in Fig. 1;

Fig. 4    eine vergrößerte Darstellung eines Schnitts gemäß A-B in Fig. 1;

Fig. 5    eine Fig. 1 entsprechende Darstellung einer zweiten Ausführungsform einer Seitenstegpartie;

Fig. 6    eine Vorderansicht, teilweise im Schnitt, einer ersten Ausführungs-form einer erfindungsgemäßen Sat-telstegpartie ohne deren Stegstützen;

Fig. 7    eine Draufsicht auf die Sattelstegpartie gemäß Fig. 6;

Fig. 8    eine vergrößerte Darstellung eines Schnitts gemäß C-D in Fig. 7;

Fig. 9    eine vergrößerte Darstellung eines Schnitts gemäß E-F in Fig. 7;

Fig. 10   eine Vorderansicht der ersten Ausführungsform der Sattelstegpartie in ihrem Zustand, den sie bei aufgesetzter Brille hat;

Fig. 11   eine Fig. 6 entsprechende Darstellung einer zweiten Ausführungsform einer erfindungsgemäßen Sattelstegpartie ohne deren Stegstützen;

Fig. 12   eine Fig. 11 zugeordnete Draufsicht;

Fig. 13   eine Schnittdarstellung gemäß G-H in Fig. 12;

Fig. 14   eine Schnittdarstellung gemäß J-K in Fig. 12;

Fig. 15   eine Schnittdarstellung gemäß L-M in Fig. 14; und

Fig. 16   eine Vorderansicht der zweiten Ausführungsform der Sattelstegpartie in ihrem Zustand, den sie bei aufgesetzter Brille hat.

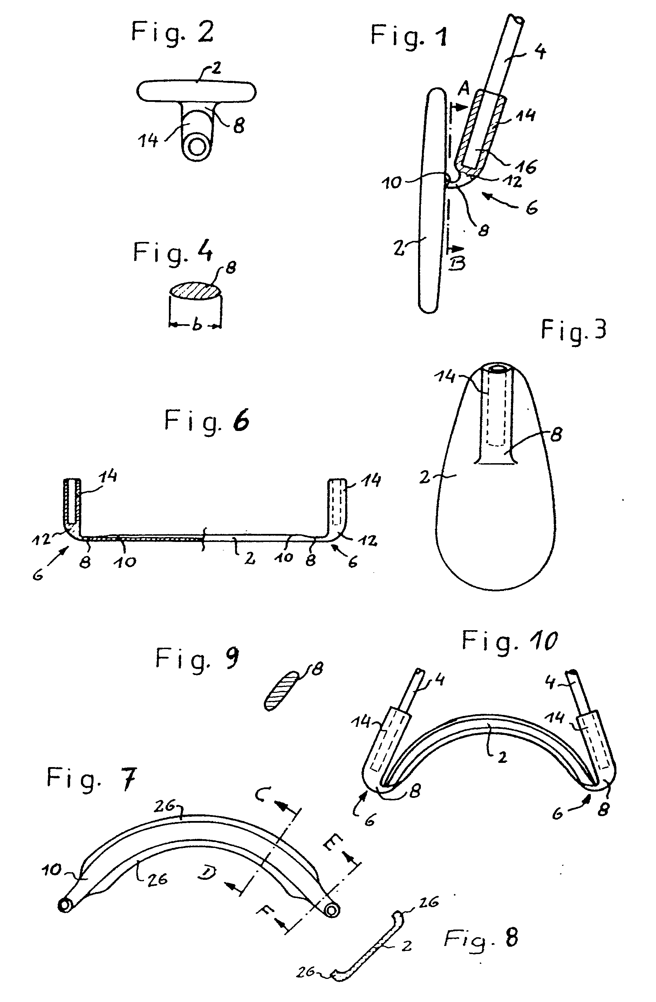

Im folgenden wird zunächst das erste Ausführungsbeispiel der Seitenstegpartie anhand der Fig. 1 bis 4 erläutert. Die dargestellte Seitenstegpartie umfaßt ein Stegplättchen 2, eine stabförmige Stegstütze 4 und eine gelenkartige Stegbefestigung 6 zum Verbinden des Stegplättchens 2 mit der Stegstütze 4. Wie insbesondere die Fig. 1 bis 3 zeigen, ist das Stegplättchen ein abgeflachtes Element mit im wesentlichem ovalem oder eiförmigem Umriß (siehe Fig. 3) mit glatten Oberflächen und abgerundetem Rand. Das Stegplättchen 2 dient dazu, die nicht dargestellte Brille, zu der die Seitenstegpartie gehört, auf einer Nasenflanke des Brillenträgers abzustützen und zu diesem Zweck an der nicht dargestellten Nasenflanke des Brillenträgers anzuliegen. Das Stegplättchen 2 besteht homogen aus einem geeigneten Kunststoff, der insbesondere hautverträglich, alterungsbeständig und hinreichend weich und elastisch ist. Diese Forderungen können beispielsweise durch Weich-PVC, Silikonkautschuke und thermoplastische Polyether-Block-Amide sowie Polyurethane erfüllt sein.

Bei der Stegstütze 4 handelt es sich um ein stabförmiges Element aus Kunststoff oder Metall, das in Fig. 1 nicht in voller Länge dargestellt ist und das an seinem nicht dargestellten, oberen Ende auf beliebige geeignete Weise an der nicht dargestellten übrigen Fassung der Brille verankert oder befestigt ist. Beim hier beschriebenen Ausführungsbeispiel besteht die Stegstütze aus Kunst-stoff, beispielsweise einem geeigneten Polyetheri-mid, und hat sie eine zylindrische Form mit glatter Oberfläche.

Die Stegbefestigung 6 umfaßt einen biegsamen Abschnitt 8, der unmittelbar am Stegplättchen 2 angeformt ist und dementsprechend stofflich homogen aus demselben Werkstoff wie das Stegplättchen 2 besteht. Seine Flexibilität hat der biegsame Abschnitt 8 aufgrund seiner stofflichen Beschaffenheit in Verbindung mit seiner Form und seinen Abmessungen. Wie Fig. 4 erkennen läßt, die das Querschnittsprofil des biegsamen Abschnitts 8 zeigt, wie es sich durch den Schnitt A-B in Fig. 1 ergibt, hat das Querschnittsprofil die Form eines flachen Ovals, so daß der biegsame Abschnitt 8 eine wesentlich größere Breite b (siehe Fig. 2, 3 und 4) als Höhe bzw. Dicke (siehe Fig. 1) hat. Das in Fig. 1 linke Ende 10 des biegsamen Abschnitts 8, das hier als erstes Ende bezeichnet wird, befindet sich unmittelbar auf der in Fig. 3 in Ansicht sichtbaren Rückseite des Stegplättchens 2. An diesem ersten Ende ist somit der biegsame Abschnitt 8 fest mit dem Stegplättchen 2 verbunden, und zwar ungefähr in dessen Mitte.

Der biegsame Abschnitt 8 weist ein von seinem ersten Ende 10 und somit vom Stegplättchen 2 abgewandtes, zweites Ende 12 auf. An diesem zweiten Ende 12 geht der biegsame Abschnitt 8 in eine längliche Hülse 14 über, die einstückig mit dem biegsamen Abschnitt 8 und somit mit dem Stegplättchen 2 ausgebildet ist, so daß das Stegplättchen 2, der biegsame Abschnitt 8 und die Hülse 14 gleichzeitig in einem gemeinsamen Spritzgießvorgang hergestellt sein können. Die Hülse 14 ist an ihrem in Fig. 1 unteren, in das zweite Ende 12 des biegsamen Abschnitts 8 übergehenden Ende geschlossen. In die Hülse 14 ist das in Fig. 1 untere Ende 16 der Stegstütze 4 gesteckt, wobei die Hülse 14 entweder allein durch Reibschluß mit dem Ende 16 fest verbunden ist oder diese Verbindung durch Kleben oder Schweißen hergestellt ist.

Da der biegsame Abschnitt 8 einerseits an seinem ersten Ende 10 fest mit dem Stegplättchen 2 verbunden ist und andererseits an seinem zweiten Ende 12 fest mit der Hülse 14 und diese wiederum fest mit dem unteren Ende 16 der Stegstütze 4 verbunden ist, erfüllen der biegsame Abschnitt 8 und die Hülse 14 die von der Stegbefestigung 6 geforderte Funktion, das Stegplättchen 2 mit der Stegstütze 4 zu verbinden. Wegen der Flexibilität des biegsamen Abschnitts 8 erlaubt diese Stegbefestigung 6 zugleich eine gewisse Relativbewegung zwischen dem Stegplättchen 2 und der Stegstütze 4, so daß die Stegbefestigung 6 in der Art eines Filmscharniers gelenkartig wirkt. Aufgrund seines Querschnittsprofils und der Lage von dessen kleinster und größter Abmessung (Breite b) sind die Biegerichtungen, in denen der biegsame Abschnitt 8 einen größeren oder einen kleineren Biegewiderstand hat, festgelegt. Beim dargestellten Ausführungsbeispiel ist der Biegewiderstand des biegsamen Abschnitts 8 am geringsten gegen eine Schwenkung des Stegplättchens 2 um eine Achse, die senkrecht zur Zeichenebene von Fig. 1 in etwa durch die Mitte des biegsamen Abschnitts 8 verläuft. Am größten ist der Biegewiderstand des biegsamen Abschnitts 8 gegen eine Schwenkung des Stegplättchens 2 um eine Achse, die senkrecht zur Zeichenebene von Fig. 2 ungefähr durch die Mitte des biegsamen Abschnitts 8 verläuft. Bewegungen des Stegplättchens 2 relativ zur Stegstütze 4 in anderen Biegerichtungen setzt der biegsame Abschnitt 8 einen zwischen diesem größten Biegewiderstand und diesem kleinsten Biegewiderstand liegenden Widerstand entgegen. Somit kann durch Form und Lage des Querschnittsprofils des biegsamen Abschnitts das Auslenk- bzw. Schwenkverhalten des Stegplättchens 2 relativ zur Stegstütze 4 gesteuert werden. In den Fig. 1 bis 4 sind das Stegplättchen 2 und die Stegbefestigung 6 im entspannten Zustand gezeigt, d.h. in einem Zustand, den das Stegplättchen 2 und der elastische Abschnitt 8 ohne elastische Verformungen haben. Beim Gebrauch der Seitenstegpartie können sich andere Lagen der Elemente der Seitenstegpartie relativ zueinander ergeben, die insbesondere durch die Biegsamkeit des biegsamen Abschnitts 8 ermöglicht sind.

Ein besonderer Vorteil des vorstehend beschriebenen Ausführungsbeispiels der Seitenstegpartie besteht darin, daß die beschriebene Stegbefestigung 6 das Seitenstegplättchen 2 nicht versteift, und zwar auch nicht im Bereich des Übergangs zwischen dem Abschnitt 8 und dem Stegplättchen 2. Dadurch bleibt die Weichheit des Stegplättchens 2, die diesem beispielsweise durch die Wahl des Werkstoffs gegeben wird, auch im genannten Übergangsbereich erhalten. Ein anderer Vorteil der beschriebenen Seitenstegpartie besteht darin, daß sie keine beschädigungsempfindliche Elemente wie beispielsweise eine Kugel, Kugelpfanne, Lagerzapfen oder Lagerbohrungen aufweist. Mangels solcher Elemente ist sie auch nicht in ihrer Beweglichkeit durch Verschmutzungen gefährdet, die im Bereich relativ zueinander bewegbarer Oberflächen solcher Elemente auftreten können.

Schließlich ist aufgrund der einstückigen Ausbildung von Seitenstegplättchen 2, biegsamem Abschnitt 8 und Hülse 14 auch der Herstellungsaufwand, den die Stegbefestigung erfordert, gering.

Fig. 5 zeigt ein weiteres Ausführungsbeispiel der Erfindung, bei dem es sich um eine Abwandlung des anhand der Fig. 1 bis 4 erläuterten ersten Ausführungsbeispiels handelt. Für gleiche bzw. entsprechende Elemente wie beim ersten Ausführungsbeispiel sind in Fig. 5 die gleichen Bezugszeichen verwendet. Diese Elemente werden nicht erneut erläutert. Im folgenden werden lediglich die Unterschiede zwischen dem Ausführungsbeispiel gemäß den Fig. 1 bis 4 und dem zweiten Ausführungsbeispielen erläutert.

Das Ausführungsbeispiel gemäß Fig. 5 unterscheidet sich vom ersten Ausführungsbeispiel dadurch, daß die Hülse 14 nicht nur an ihrem in Fig. 5 oberen sondern auch an ihrem in Fig. 5 unteren Ende offen ist, d.h. daß die Hülsenöffnung durchgehend ist, und daß am unteren Ende 16 der Stegstütze 4 zwei ringförmig umlaufende Rastvorsprünge 20 ausgebildet sind, die in Rasteingriff mit der Hülse 14 stehen. Die Rastvorsprünge 20 ermöglichen eine hinreichend feste Verbindung zwischen der Hülse 14 und der Stegstütze 4 auch ohne Schweißen, Kleben oder Reibschluß. Die unten offene Hülsenöffnung ermöglicht es, die Stegstütze 4 gegebenenfalls so weit in die Hülse 14 einzuschieben, daß das untere Ende 16 der Stegstütze 4 aus der Hülse 14 vorsteht, wenn dies zweckmäßig ist, um beispielsweise das Stegplättchen 2 in eine gewünschte Relativlage zur übrigen Brille zu bringen. Sofern das untere Ende 16 der Stegstütze 4 aus der Hülse 14 vorsteht, kann der vorstehende Abschnitt des Endes 16 abgetrennt werden oder auch zur zusätzlichen Sicherung der Verbindung zwischen der Hülse 14 und dem Ende 16 nietartig abgeflacht sein oder werden.

Im folgenden wird unter Bezugnahme auf die Fig. 6 bis 10 ein erstes Ausführungsbeispiel einer Sattelstegpartie erläutert, wobei wiederum für Elemente der Sattelstegpartie, die schon anhand der Fig. 1 bis 4 erläutert worden sind, gleiche Bezugszeichen verwendet werden.

Die dargestellte Sattelstegpartie umfaßt das Stegplättchen 2, Stegstützen 4 sowie zwei Stegbefestigungen 6. Das Stegplättchen 2 der Sattelstegpartie hat eine andere Form als das Stegplättchen 2 der vorstehend beschriebenen Seitenstegpartien, und zwar ist das Stegplättchen 2 der Sattelstegpartie als flaches, im entspannten Zustand ebenes Element ausgebildet, das, wie die Draufsicht gemäß Fig. 7 zeigt, bogenförmig verläuft und ferner verhältnismäßig dünn ist, wie insbesondere die vergrößerte Schnittdarstellung gemäß Fig. 8, sowie die linke Hälfte von Fig. 6 zeigen. Die Längsränder 26 des Stegplättchens 2 sind hochgezogen, wie wiederum insbesondere Fig. 8 zeigt. Während die Fig. 6 und 7 die Sattelstegpartie ohne die beiden Stegstützen 4 im entspannten Zustand zeigen, zeigt Fig. 10 die Sattelstegpartie ungefähr in dem Zustand, den sie bei aufgesetzter Brille hat. Die vorstehend erläuterte Ausbildung des Stegplättchens 2 dient dazu, daß dasselbe die in Fig. 10 dargestellte Form einnehmen und sich somit dem Nasenrücken anpassen kann. Das Stegplättchen 2 der Sattelstegpartie, das im Zustand gemäß Fig. 10 quasi zwischen den beiden Stegbefestigungen 6 gespannt ist, benötigt aufgrund der besonderen Eigenschaften einer Sattelstegpartie nur eine geringere Steifheit als das Stegplättchen einer Seitenstegpartie, weswegen bei dem in den Fig. 6 bis 10 dargestellten Ausführungsbeispiel der Sattelstegpartie das Stegplättchen 2 annähernd folienartig dünn ist.

An jedem seiner beiden Endteile geht das längliche Stegplättchen 2 mit seinem Rand unmittelbar in das erste Ende 10 des dort befindlichen biegsamen Abschnitts 8 über, wie insbesondere die Fig. 6 und 7 zeigen, so daß im entspannten Zustand der Sattelstegpartie das Stegplättchen 2 und die sich daran anschließenden Bereiche der beiden biegsamen Abschnitte 8 in derselben Ebene liegen. Jeder der beiden biegsamen Abschnitte 8 hat im wesentlichen die gleiche Ausbildung wie der biegsame Abschnitt 8 beim ersten Ausführungsbeispiel. Insbesondere weist jeder der beiden biegsamen Abschnitte 8 ebenfalls ein Querschnittsprofil in Form eines flachen Ovals auf, wie Fig. 9 zeigt, und geht jeder der beiden biegsamen Abschnitte 8 an seinem zweiten Ende 12 in die Hülse 14 über, in die jeweils die Stegstütze 4 gesteckt ist. Die Stegstützen 4 und die Hülsen 14 haben die Ausbildung, wie sie vorstehend für die Stegstütze und die Hülse beim ersten Ausführungsbeispiel der Seitenstegstütze erläutert ist.

Die Unterschiede zwischen dem ersten Ausführungsbeispiel der Sattelstegpartie und dem ersten Ausführungsbeispiel der Seitenstegpartie bestehen somit im wesentlichen in der unterschiedlichen Ausbildung des jeweiligen Stegplättchens 2 und in der Tatsache, daß bei der Sattelstegpartie zwei Stegstützen 4 und dementsprechend zwei Stegbefestigungen 6 vorhanden sind. Die Ausbildung der jeweiligen Stegbefestigung 6 der Sattelstegpartie ist jedoch die gleiche wie die der Stegbefestigung bei der Seitenstegpartie, so daß die Sattelstegpartie die gleichen günstigen Eigenschaften hat, wie sie vorstehend als durch die Stegbefestigung verursachte günstige Eigenschaften der Seitenstegpartie gemäß den Fig. 1 bis 4 erläutert sind.

Die anhand der Fig. 5 am Beispiel der Seitenstegpartie erläuterte weitere Ausbildungsmöglichkeit der Stegbefestigung 6 ist auch bei der Sattelstegpartie gemäß den Fig. 6 bis 10 anwendbar, weswegen diese weiteren Ausbildungsmöglichkeiten in Verbindung mit der Sattelstegpartie nicht erneut erläutert werden.

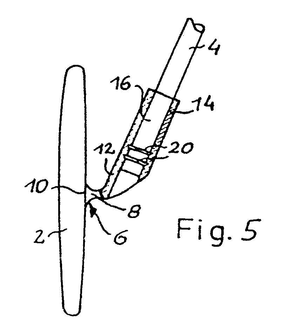

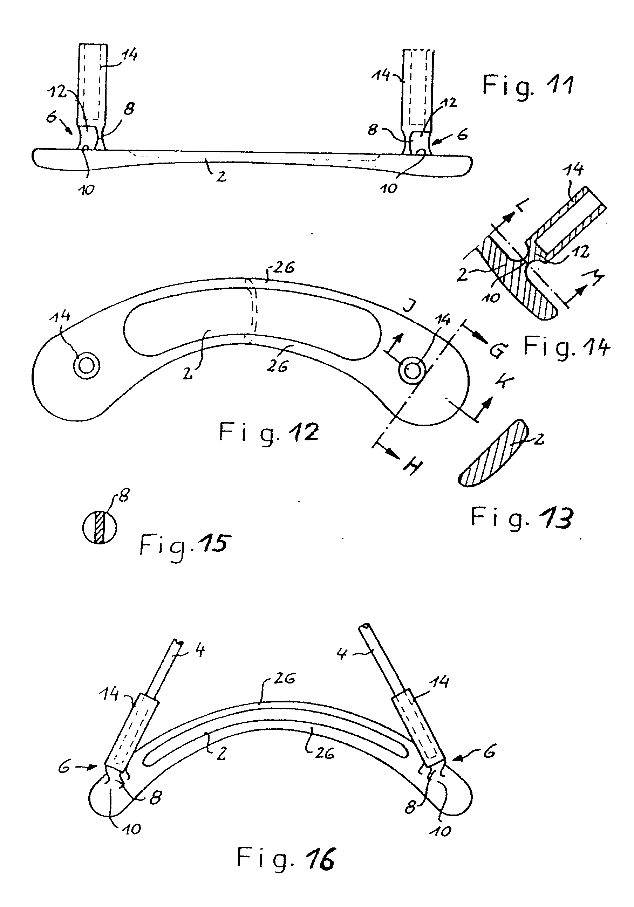

Im folgenden wird ein zweites Ausführungbeispiel der Sattelstegpartie anhand der Fig. 11 bis 16 näher erläutert, wobei diejenigen Teile und Elemente, die mit Teilen und Elementen der Sattelstegpartie gemäß den Fig. 6 bis 10 übereinstimmen, mit gleichen Bezugszeichen versehen sind und nicht erneut erläutert werden. Vielmehr werden im folgenden lediglich die Unterschiede dieser weiteren Sattelstegpartie zur erstbeschriebenen Sattelstegpartie erläutert.

Das Stegplättchen 2 ist in seinem mittleren Bereich verhältnismäßig dünn ausgebildet und weist dort die hochgezogenen Längsränder 26 auf. An seinen beiden Enden dagegen hat das Stegplättchen 2 eine größere Dicke als in seinem mittleren Bereich, wie insbesondere Fig. 13 erkennen läßt, so daß es dort etwas steifer ist. Anders als bei der erstbeschriebenen Sattelstegpartie, bei der die beiden biegsamen Abschnitte 8 der beiden Stegstützen 4 unmittelbar in Verlängerung der entgegengesetzten Endteile des Stegplättchens ausgebildet sind sind bei der Ausführungsform gemäß den Fig. 11 bis 16 die ersten Enden 10 der beiden biegsamen Abschnitte 8 auf der einen Seitenfläche, nämlich der in Fig. 12 sichtbaren Rückseite des Stegplättchens 2, in gewissem Abstand von dessen Rändern angeordnet. Die ersten Enden 10 sind einstückig am Stegplättchen 2 auf dessen Rückseite angeformt, und zwar derart, daß im entspannten Zustand die Stegbefestigungen 6, jeweils bestehend aus der Hülse 14 und dem biegsamen Abschnitt 8, vom Stegplättchen 2 senkrecht nach oben stehen, wie Fig. 12 zeigt.

Das Querschnittsprofil der beiden biegsamen Abschnitte 8 hat die Form eines flachen Rechtecks, wie insbesondere Fig. 15 erkennen läßt. Durch die Lage der langen Achse dieses Rechtecks relativ zum Stegplättchen 2 ist wiederum die bevorzugte Biegerichtung festgelegt, in der die jeweilige Stegstütze 4 bzw. die dieser zugeordnete Hülse 14 bei einer Schwenkung relativ zum Stegplättchen 2 auf den geringsten Biegewiderstand trifft. Im übrigen stimmt die Ausbildung der Stegbefestigungen 6 der Sattelstegpartie gemäß den Fig. 11 bis 16 mit der Ausbildung der Stegbefestigung bei der Seitenstegpartie gemäß den Fig. 1 bis 4 überein. Ferner ist den Ausführungsbeispielen gemäß den Fig. 1 bis 4, den Fig. 6 bis 10 und den Fig. 11 bis 16 gemein, daß das Stegplättchen 2 und die jeweiligen Stegbefestigungen 6 einstückig miteinander aus demselben Werkstoff gefertigt sind, wobei für die Elemente der beiden beschriebenen Sattelstegpartien die gleichen Werkstoffe in Frage kommen, wie sie vorstehend für die Seitenstegpartie gemäß den Fig. 1 bis 4 genannt sind. Die durch die spezielle Ausbildung der Stegbefestigung verursachten, in Verbindung mit den Fig. 1 bis 4 erläuterten günstigen Eigenschaften hat auch die Sattelstegpartie gemäß den Fig. 11 bis 16.

Die Stegbefestigungen 6 der Sattelstegpartie gemäß den Fig. 11 bis 16 können die gleiche Ausgestaltung erfahren, wie die Stegbefestigungen 6 der Seitenstegpartien gemäß Fig. 5. Zur Vermeidung von Wiederholungen wird diese Ausgestaltung der Stegbefestigungen jedoch nicht erneut in Verbindung mit einer Sattelstegpartie erläutert.

## Patentansprüche

1. Seitenstegpartie für eine Brille, mit einem Stegplättchen (2), einer stabförmigen Stegstütze (4) und einer Stegbefestigung (6), die zum Verbinden des Stegplättchens mit der Stegstütze dient und einen biegsamen Abschnitt (8) aufweist, der an seinem einen, ersten Ende (10) einstückig mit dem Stegplättchen ausgebildet und an seinem anderen, zweiten Ende (12) fest mit der zugeordneten Stegstütze verbunden ist, wobei der biegsame Abschnitt und das Stegplättchen stofflich homogen aus einem Kunststoff bestehen und wobei der biegsame Abschnitt aufgrund seiner Form und der Eigenschaften seines gewählten Werkstoffs flexibel ist, dadurch gekennzeichnet, daß der biegsame Abschnitt (8) ein bewegliches Gelenk in der Art eines Filmscharniers ist, daß am zweiten Ende (12) des biegsamen Abschnitts (8) eine Hülse (14) einstückig angeformt ist, in die das zugeordnete Ende (16) der stabförmigen Stegstütze (4) eingesetzt ist, und daß das Stegplättchen, der biegsame Abschnitt und die Hülse aus demselben weichen, elastischen Kunststoff bestehen.

2. Sattelstegpartie für eine Brille, mit einem bogenförmigen Stegplättchen (2), zwei stabförmigen Stegstützen (4) und zwei Stegbefestigungen (6), die jeweils zum Verbinden eines Endteils des Stegplättchens mit einer der beiden Stegstützen dienen und einen biegsamen Abschnitt (8) aufweisen, der an seinem einen, ersten Ende (10) einstückig mit dem jeweiligen Endteil des Stegplättchens ausgebildet und an seinem anderen, zweiten Ende (12) fest mit der zugeordneten Stegstütze verbunden ist, wobei jeder der beiden biegsamen Abschnitte und das Stegplättchen stofflich homogen aus einem Kunststoff bestehen und wobei jeder der beiden biegsamen Abschnitte aufgrund seiner Form und der Eigenschaften seines gewählten Werkstoffs flexibel ist, dadurch gekennzeichnet, daß jeder biegsame Abschnitt (8) ein bewegliches Gelenk in der Art eines Filmscharniers ist, daß am zweiten Ende (12) jedes biegsamen Abschnitts (8) eine Hülse (14) einstückig angeformt ist, in die das zugeordnete Ende (16) der zugeordneten stabförmigen Stegstütze (4) eingesetzt ist, und daß das Stegplättchen, die biegsamen Abschnitte und die Hülsen aus demselben weichen, elastischen Kunststoff bestehen.

3. Sattelstegpartie nach Anspruch 2, dadurch gekennzeichnet, daß das erste Ende (10) des biegsamen Abschnitts (8) am Rand des Endteils des Stegplättchens (2) befestigt ist.

4. Sattelstegpartie nach Anspruch 2, dadurch gekennzeichnet, daß die ersten Enden (10) der biegsamen Abschnitte (8) am Stegplättchen (2) auf dessen einer Seitenfläche befestigt sind.

5. Seiten- oder Sattelstegpartie nach einem der Ansprüche 1 bis 4, dadurch gekennzeichnet, daß der biegsame Abschnitt (8) ein kreisförmiges Querschnittsprofil hat.

6. Seiten- oder Sattelstegpartie nach einem der Ansprüche 1 bis 4, dadurch gekennzeichnet, daß die Form des Querschnittsprofils des biegsamen Abschnitts (8) ein flaches Oval oder flaches Rechteck ist.

7. Seiten- oder Sattelstegpartie nach einem der Ansprüche 1 bis 6, dadurch gekennzeichnet, daß die Hülse (14) im Bereich des zweiten Endes (12) des biegsamen Abschnitts (8) geschlossen ist.

8. Seiten- oder Sattelstegpartie nach einem der Ansprüche 1 bis 7, dadurch gekennzeichnet, daß die Hülse (14) mit dem zugeordneten Ende (16) der zugeordneten Stegstütze (4) über Rastvorsprünge (20) in formschlüssigem Eingriff steht.

## Claims

1. Side nosepiece part for spectacles, having a nosepiece pad (2), a rod-shaped nosepiece support (4) and a nosepiece fastening (6) which serves to connect the nosepiece pad to the nosepiece support and has a flexible section (8) which at its one, first end (10) is formed in one piece with the nosepiece pad and at its other, second end (12) is rigidly connected to the associated nosepiece support, the flexible section and the nosepiece pad consisting, homogeneously as regards material, of a plastic and the flexible section being flexible as a result of its shape and the properties of its chosen material, characterised in that the flexible section (8) is a movable link in the manner of a film hinge, in that there is formed in one piece on the second end (12) of the flexible section (8) a sleeve (14), into which the associated end (16) of the rod-shaped nosepiece support (4) in inserted, and in that the nosepiece pad, the flexible section and the sleeve consist of the same soft elastic plastic.

2. Bridge nosepiece part for spectacles, having an arc-shaped nosepiece pad (2), two rod-shaped nosepiece supports (4) and two nosepiece fastenings (6) which respectively serve to connect one end part of the nosepiece pad to one of the two nosepiece supports and have a flexible section (8) which at its one, first end (10) is formed in one piece with the respective end part of the nosepiece pad and at its other, second end (12) is rigidly connected to the associated nosepiece support, each of the two flexible sections and the nosepiece pad consisting, homogeneously as regards material, of a plastic and each of the two flexible sections being flexible as a result of its shape and the properties of its chosen material, characterised in that each flexible section (8) is a movable link in the manner of a film hinge, in that there is formed in one piece on the second end (12) of each flexible section (8) a sleeve (14), into which the associated end (16) of the associated rod-shaped nosepiece support (4) in inserted, and in that the nosepiece pad, the flexible sections and the sleeves consist of the same soft elastic plastic.

3. Bridge nosepiece part according to Claim 2, characterised in that the first end (10) of the flexible section (8) is fastened to the edge of the end part of the nosepiece pad (2).

4. Bridge nosepiece part according to Claim 2, characterised in that the first ends (10) of the flexible sections (8) are fastened to the nosepiece pad (2) on one side surface of the latter.

5. Side nosepiece part or bridge nosepiece part according to one of Claims 1 to 4, characterised in that the flexible section (8) has a circular cross-sectional profile.

6. Side nosepiece part or bridge nosepiece part according to one of Claims 1 to 4, characterised in that the shape of the cross-sectional profile of the flexible section (8) is a flat oval or flat rectangle.

7. Side nosepiece part or bridge nosepiece part according to one of Claims 1 to 6, characterised in that the sleeve (14) is closed in the region of the second end (12) of the flexible section (8).

8. Side nosepiece part or bridge nosepiece part according to one of Claims 1 to 7, characterised in that the sleeve (14) is in positive engagement with the associated end (16) of the associated nosepiece support (4) via locking projections (20).

## Revendications

1. Partie à plaquette pour des lunettes, avec une plaquette de pontet (2), un appui en forme de barrette (4) et une fixation de pontet (6) qui sert à la liaison de la plaquette avec l'appui et présente une section flexible (8) qui est réalisée, à une première extrémité (10), d'un seul tenant avec la plaquette et qui est reliée fermement, à sa deuxième extrémité (12), à l'appui associé, la section flexible et la plaquette étant composées en une matière synthétique de substance homogène et la section flexible étant flexible du fait de sa forme et des propriétés du matériau choisi pour elle, caractérisée en ce que la section flexible (8) présente une articulation mobile, à la manière d'une charnière film, à la seconde extrémité (12) de la section flexible (8) étant formée d'un seul tenant une douille (14) dans laquelle est insérée l'extrémité associée (16) de l'appui en forme de barrette (4), et la plaquette, la section flexible et la douille étant composées de la même matière synthétique élastique et molle.

2. Partie de pontet de monture pour des lunettes, avec une plaquette en forme d'arc (2), deux appuis en forme de barrette (4) et deux fixations (6) qui servent chacune à la liaison d'une partie d'extrémité de la plaquette avec l'un des deux appuis et présentent une section flexible (8) réalisée d'un seul tenant avec la partie d'extrémité respective de la plaquette et reliée fermement, par son autre extrémité (12), à l'appui associé, dans laquelle chacune des deux sections flexibles et la plaquette sont composées en une matière synthétique de substance homogène et chacune des deux sections flexibles étant flexible, du fait de sa forme et des propriétés du matériau choisi pour elle, caractérisée en ce que chaque section flexible (8) présente une articulation mobile, à la manière d'une charnière film, à la seconde extrémité (12) de chaque section flexible (8) étant formée d'un seul tenant une douille (14) dans laquelle est insérée l'extrémité associée (16) de l'appui en forme de barrette (4), et la plaquette, la section flexible et la douille étant composées de la même matière synthétique élastique et molle.

3. Partie de pontet de monture de lunette selon la revendication 2, caractérisée en ce que l a première extrémité (10) de la section flexible (8) est fixée sur le bord de la partie d'extrémité de la plaquette (2).

4. Partie de pontet de monture de lunette selon la revendication 2, caractérisée en ce que les premières extrémités (10) des sections flexibles (8) sont fixées sur l'une des faces latérales de la plaquette (2).

5. Partie à plaquette ou de pontet de monture de lunette selon l'une des revendications 1 à 4, caractérisée en ce que la section flexible (8) présente une section transversale circulaire.

6. Partie à plaquette ou de pontet de monture de lunette selon l'une des revendications 1 à 4, caractérisée en ce que la forme du profil de section transversale de la section flexible (8) est un ovale plat ou un rectangle plat.

7. Partie à plaquette ou de pontet de monture de lunette selon l'une des revendications 1 à 6, caractérisée en ce que la douille (14) est fermée dans la zone de la deuxième extrémité (12) de la section flexible (8).

8. Partie à plaquette ou de pontet de monture de lunette selon l'une des revendications 1 à 7, caractérisée en ce que la douille (14) est en prise par ajustement de forme, par l'extrémité (16) associée de l'appui (4) associé, par l'intermédiaire de saillies d'encliquetage (20).

Fig. 2

Fig. 1

Fig. 4

Fig. 3

Fig. 6

Fig. 9

Fig. 10

Fig. 7

Fig. 8

Fig. 5

Fig. 11

Fig. 12

Fig. 13

Fig. 14

Fig. 15

Fig. 16